# EUROPÄISCHE PATENTSCHRIFT

(11) **EP 2 647 562 B1**
(45) Veröffentlichungstag und Bekanntmachung des Hinweises auf die Patenterteilung: **17.06.2015**
(21) Anmeldenummer: 13001471.5
(22) Anmeldetag: 22.03.2013
(51) Int. Cl.: B62K 9/02, B62M 6/60, B62K 9/00

(54) **Antrieb für ein Tretfahrzeug insbesondere für Kinder**
Drive for a pedal vehicle particularly for children
Entraînement pour un trotteur, en particulier pour des enfants

(30) Priorität: 07.04.2012 DE 102012007166
(43) Veröffentlichungstag der Anmeldung: 09.10.2013
(73) Patentinhaber: Franz Schneider GmbH & Co. KG, 96465 Neustadt (DE)
(72) Erfinder: Schneider, Frank, 96465 Neustadt (DE)
(74) Vertreter: Flosdorff, Jürgen

(56) Entgegenhaltungen:
- US-A- 3 827 519
- US-A- 4 183 418
- US-A- 6 158 542

## Beschreibung

Die Erfindung betrifft einen Antrieb für ein Tretfahrzeug insbesondere für Kinder, mit einer Antriebsachse mit zwei Antriebsrädern, ferner mit einer Pedalkurbel, deren Ritzel über eine Kette mit einem fest auf der Antriebsachse sitzenden weiteren Ritzel verbunden ist.

Das Tretfahrzeug hat bevorzugt vier Räder, wie dies beispielsweise bei den weit verbreiteten Spielfahrzeugtraktoren der Fall ist, es kann sich aber auch um ein Dreirad handeln. Grundsätzlich ist die Erfindung auch auf Tretfahrzeuge anwendbar, die nicht als Spielgeräte für Kinder, sondern zur Benutzung durch Erwachsene bestimmt sind.

Die Erfindung wird nachfolgend im Zusammenhang mit einem Kinderspielfahrzeug beschrieben. Die herkömmlichen Tretfahrzeuge können von Kindern auf ebenen Strecken leicht betätigt werden. Wenn das Tretfahrzeug aber eine steile Strecke hinauf fahren soll, kann dies die Kräfte eines Kindes überfordern. Dies kann auch dann der Fall sein, wenn an dem Tretfahrzeug ein beladener Anhänger angekoppelt ist, oder wenn das Tretfahrzeug mit einem Schneeräumschild versehen ist, um nur einige Beispiele zu nennen.

Die US 3 827 519 A offenbart ein Tretfahrzeug bei dem eine von Pedalen angetriebene Kette in ein Zahnrad eingreift, das zusammen mit einem Zahnradgetriebe auf der Antriebsachse sitzt, um ein Hinterrad anzutreiben. Das Fahrzeug hat außerdem einen Motor, der über einen Antriebsriemen mit Riemenscheiben verbunden ist, die mit einer Nabe des anderen Hinterrades drehbar verbunden sind. Der Motor ist mit einer Kupplung versehen.

Die US 4,183,418 A offenbart ein Dreirad, dessen Hinterräder drehfest mit zwei koaxialen Achsen verbunden sind. Eine Achse greift in einer Aussparung der anderen Achse ein und ist entweder gegenüber dieser frei drehbar oder sie kann zur gemeinsamen Drehung mit der anderen Achse durch einen Stift fixiert werden. Durch Pedale kann über ein Kettenrad eine Achse mit dem Hinterrad angetrieben werden. Der Motor ist an beiden Seiten über Gleitkupplungen mit Antriebsritzeln verbunden, die über Kettenräder die beiden Achsen und die damit verbundenen Hinterräder antreiben können.

Ganz allgemein liegt der vorliegenden Erfindung die Aufgabe zugrunde, ein Tretfahrzeug anzugeben, dessen Gebrauchswert erhöht ist. Wenn es sich um ein Tretfahrzeug für Kinder handelt, soll auch der Spielwert des Tretfahrzeugs erhöht sein.

Diese Aufgabe wird erfindungsgemäß durch die Merkmale des Patentanspruchs 1 gelöst. Vorteilhafte Ausgestaltungen der Erfindung sind in den Unteransprüchen gekennzeichnet.

Die Erfindung sieht vor, dass das Tretfahrzeug einen Antrieb hat, dessen Antriebsachse mittels der Pedalkurbel in beiden Drehrichtungen antreibbar ist, wobei das eine Antriebsrad der Antriebsachse über einen beidseitigen Freilauf mit der Antriebsachse verbindbar ist, und wobei das andere Antriebsrad frei drehbar auf der Antriebsachse sitzt und von einem Elektromotor antreibbar ist.

Der erfindungsgemäße Antrieb weist zwei voneinander unabhängige Antriebsarten auf, so dass folgende Betriebsarten möglich sind:
1. ein reiner Motorantrieb mit stehenden Pedalen;
2. ein reiner Pedalantrieb und
3. ein Motorantrieb mit Pedalunterstützung z. B. an Steigungen.

Außerdem ist erfindungsgemäß vorgesehen, dass der Elektromotor über einen beidseitigen Freilauf mit einem zugehörigen Motorritzel verbunden ist, das mit einem frei drehbar auf der Antriebsachse sitzenden weiteren Ritzel kämmt, das seinerseits mit dem anderen Antriebsrad antriebsmäßig verbunden ist. Infolge des Freilaufs an dem Elektromotor ist der oben erwähnte reine Pedalantrieb möglich. Hierdurch besteht auch die Möglichkeit, das Tretfahrzeug mit leerem Akku allein durch den Pedalantrieb zu fahren.

Nach einem weiteren Vorschlag der Erfindung kann das durch den Elektromotor antreibbare Ritzel, das frei drehbar auf der Antriebsachse sitzt, fest mit einem Vierkant verbunden sein, der in eine entsprechende Aussparung des zugehörigen Antriebsrads zur gemeinsamen Drehung eingreift. Auf dem Vierkant kann eine zylindrische Hülse angeordnet sein, die sich von dem Ritzel bis nahe zu dem Antriebsrad erstreckt.

Nach einem weiteren Vorschlag der Erfindung ist der Elektromotor in beiden Drehrichtungen betätigbar, so dass er das Tretfahrzeug vorwärts und rückwärts antreiben kann. Die Drehzahl des Elektromotors sollte einstellbar sein, so dass das Tretfahrzeug mit ausgewählter Geschwindigkeit durch den Elektromotor antreibbar ist.

Nach einem weiteren Vorschlag der Erfindung kann der Elektromotor über ein zweistufiges Planetengetriebe mit dem Freilauf verbunden sein. Die Erfindung ist jedoch hierauf nicht beschränkt, vielmehr kann z.B. auch ein Schneckengetriebe vorgesehen sein.

Zweckmäßigerweise ist die Antriebsachse des Tretfahrzeugs dessen Hinterachse. Die Ausbildung kann aber auch so getroffen sein, dass die Vorderachse durch die Pedalkurbel drehbar ist.

Außerdem ist bevorzugt, dass das von der Pedalkurbel antreibbare Antriebsrad das linke Hinterrad ist. Zweckmäßigerweise ist das Gehäuse des zugehörigen Freilaufs, das mit dem antreibbaren Hohlrad des Freilaufs fest verbunden ist, mit dem linken Hinterrad verschraubt.

Der Elektromotor wird bevorzugt über einen Schalter mit den Stellungen vorwärts/aus/rückwärts und mit Tastern am Lenkrad des Tretfahrzeugs betätigt. Wenn das Tretfahrzeug von dem Elektromotor angetrieben wird wird, sein Drehmoment über das Motorritzel auf das frei drehbar auf der Antriebswelle sitzende Ritzel und von diesem über den damit fest verbundenen Vierkantmitnehmer auf das rechte Hinterrad übertragen. Infolge des Freilaufs in dem linken Hinterrad ist auf diese Weise ein reiner Motorantrieb mit stehenden Pedalen möglich.

Beim alleinigen Pedalantrieb, der durch den beidseitigen Freilauf an dem Elektromotor möglich ist, wird die Antriebskraft über die Kette auf das fest mit der Antriebsachse verbundene Ritzel und über den zugehörigen Freilauf, der zweckmäßigerweise mit der Antriebsachse verstiftet ist, auf das linke Hinterrad übertragen.

Darüber hinaus ist auch ein Motorantrieb mit Pedalunterstützung möglich, wobei beide Hinterräder angetrieben werden.

Es ist bevorzugt, dass als beidseitiger Freilauf ein Torpedofreilauf verwendet wird, der mittels einer um +/- ca. 85° drehbaren Buchse mit Aussparung funktioniert, die über eine Feder und einen feststehenden Mitnehmer abgebremst wird. Je nach Drehrichtung der Achse besteht die Möglichkeit des Eingriffs eines der beiden federnden Mitnehmer.

Eine Ausführungsform des erfindungsgemäßen Antriebs wird nachfolgend mit Bezug auf die beigefügten Zeichnungen beschrieben. Dabei zeigen:
- Figur 1: eine perspektivische Ansicht des Antriebs;
- Figur 2: eine Aufsicht auf den Antrieb gemäß Figur 1 und
- Figur 3: einen Vertikalschnitt durch den verwendeten Freilauf.

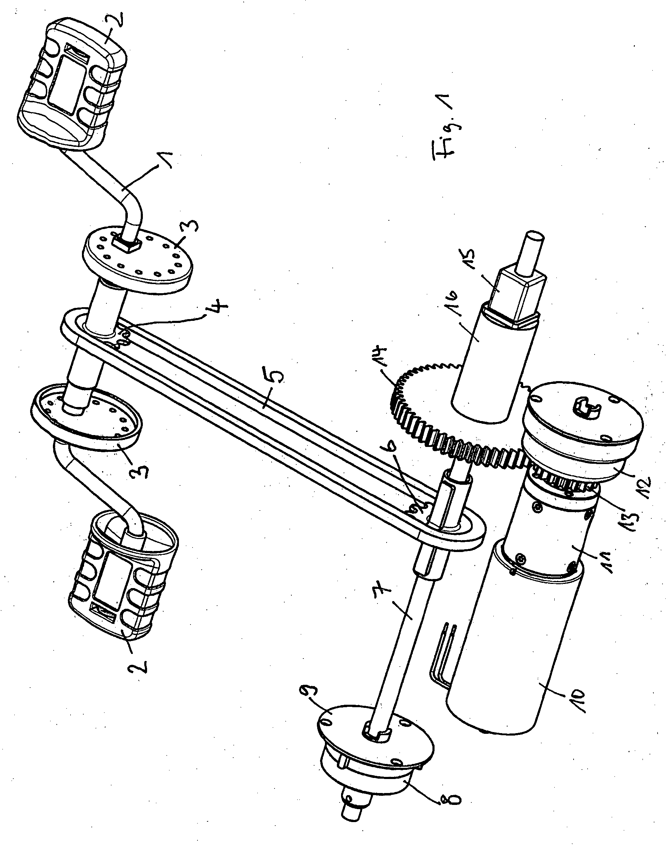

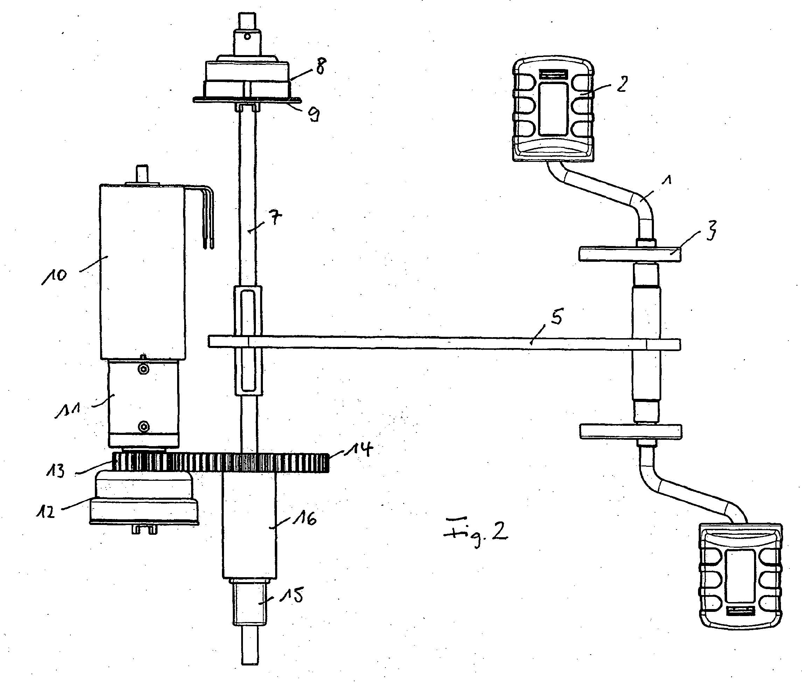

Der in den Figuren 1 und 2 dargestellte Hybridantrieb enthält eine Pedalkurbel 1 mit zwei Pedalen 2 und Exzenterlagern 3 für die Pedalkurbel 1. Ein Ritzel 4 ist mit der Pedalkurbel 1 fest verbunden. Das Ritzel 4 steht über eine Kette 5 mit einem Hinterachsritzel 6 in Antriebsverbindung, das mit der Hinterachse 7 eines nicht dargestellten Tretfahrzeugs drehfest verbunden ist.

Auf der Antriebsachse 7 ist ein in beiden Drehrichtung wirkender Freilauf 8 angeordnet, dessen Gehäuseteil 9 an dem linken Hinterrad des Tretfahrzeugs angeschraubt ist.

Ein Elektromotor 10 ist mit einem Planetengetriebe 11 verbunden sowie mit einem beidseitigen Freilauf 12 für die Motorwelle mit einem Motorritzel 13, das mit einem frei drehend auf der Antriebsachse 7 angeordneten weiteren Ritzel 14 kämmt. Das Ritzel 14 ist an einem ebenfalls freidrehend auf der Hinterachse 7 sitzenden Vierkant 15 angesetzt, der in eine entsprechende Aussparung des rechten Hinterrads des Tretfahrzeugs eingreift, um dieses anzutreiben. Auf dem Vierkant sitzt eine Hülse 16.

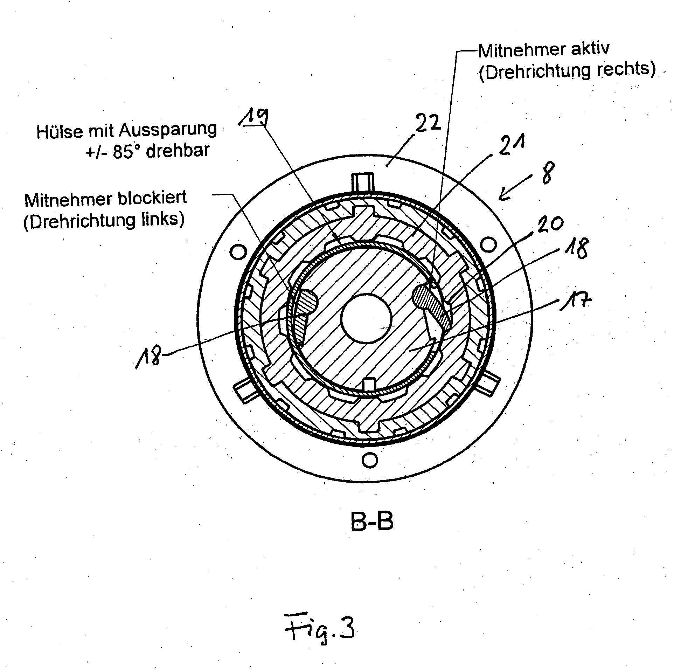

Der in Figur 3 dargestellte Freilauf 8 enthält ein inneres Rad 17, das mit einem hülsenförmigen Ansatz fest verbunden ist, der die Antriebsachse 7 aufnimmt, mit der der Ansatz verstiftet ist. Das innere Rad 17 enthält zwei federbeaufschlagte Mitnehmer 18, von denen je nach Drehrichtung eines durch eine Aussparung in einer drehbaren Hülse 19 hindurch in eine Ausnehmung 20 eines radial äußeren Rings 21 eingreifen kann, um diesen bei der Drehung des inneren Rads 17 mitzunehmen. Das äußere Rad 21 ist mit einem Gehäuseteil 22 fest verbunden, das an dem linken Hinterrad des Tretfahrzeugs anschraubbar ist.

## Patentansprüche

1. Antrieb für ein Tretfahrzeug insbesondere für Kinder, mit einer Antriebsachse (7) mit zwei Antriebsrädern, ferner mit einer Pedalkurbel (1), deren Ritzel (4) über eine Kette (5) mit einem fest auf der Antriebsachse sitzenden weiteren Ritzel (6) verbunden ist, wobei ein erstes Antriebsrad frei drehbar auf der Antriebsachse (7) sitzt und von einem Elektromotor (10) antreibbar ist, **dadurch gekennzeichnet, dass** ein zweites Antriebsrad über einen ersten beidseitigen Freilauf (8) mit der Antriebsachse (7) verbunden ist und der Elektromotor über einen zweiten beidseitigen Freilauf (12) mit einem Motorritzel (13) verbunden ist, das mit einem frei drehbar auf der Antriebsachse (7) sitzenden weiteren Ritzel (14) kämmt, das mit dem anderen Antriebsrad antriebsmäßig verbunden ist.

2. Antrieb nach Anspruch 1,
**dadurch gekennzeichnet,**
**dass** das weitere Ritzel (14) fest mit einem Vierkant (15) verbunden ist, auf dem das andere Antriebsrad drehfest sitzt.

3. Antrieb nach den Ansprüchen 1 oder 2,
**dadurch gekennzeichnet,**
**dass** der Elektromotor (10) in beiden Drehrichtungen betätigbar ist.

4. Antrieb nach den Ansprüchen 1 bis 3,
**dadurch gekennzeichnet,**
**dass** die Drehzahl des Elektromotors (10) einstellbar ist.

5. Antrieb nach den Ansprüchen 1 bis 4,
**dadurch gekennzeichnet,**
**dass** der Elektromotor (10) über ein zweistufiges Planetengetriebe (11) mit dem Freilauf (12) verbunden ist.

6. Antrieb nach den Ansprüchen 1 bis 5,
**dadurch gekennzeichnet,**
**dass** die Antriebsachse (7) die Hinterachse des Tretfahrzeugs ist.

7. Antrieb nach den Ansprüchen 1 bis 6,
**dadurch gekennzeichnet,**
**dass** das von der Pedalkurbel (1) antreibbare Antriebsrad das linke Hinterrad ist.

8. Antrieb nach Anspruch 7,
**dadurch gekennzeichnet,**
**dass** das Gehäuse (9) des auf der Antriebsachse (7) angeordneten Freilaufs (8) mit dem linken Hinterrad verschraubt ist.

9. Antrieb nach Anspruch 2,
**dadurch gekennzeichnet,**
**dass** auf dem Vierkant (15) eine zylindrische Hülse (16) angeordnet ist, die sich von dem zugehörigen Ritzel (14) zu dem rechten Hinterrad erstreckt.

## Claims

1. A drive for a pedal vehicle, particularly for children, including a drive shaft (7) with two driven wheels and a pedal crank (1), the sprocket (4) of which is connected by means of a chain (5) to a further sprocket (6) fixedly situated on the drive shaft, wherein a first driven wheel is freely rotatably located on the drive shaft (7) and is drivable by an electric motor (10), **characterised in that** a second driven wheel is connected to the drive shaft (7) by a first two-way freewheel (8) and the electric motor is connected by a second two-way freewheel (12) to a motor pinion (13), which is in mesh with a further pinion (14), which is freely rotatably situated on the drive shaft (7) and is in drive connection with the other driven wheel.

2. A drive as claimed in Claim 1, **characterised in that** the second pinion (14) is rigidly connected to a four-cornered shaft (15), on which the other driven wheel is rotationally fixedly located.

3. A drive as claimed in Claims 1 or 2, **characterised in that** the electric motor (10) is operable in both directions of rotation.

4. A drive as claimed in Claims 1 to 3, **characterised in that** the speed of rotation of the electric motor (10) is adjustable.

5. A drive as claimed in Claims 1 to 4, **characterised in that** the electric motor (10) is connected to the freewheel (12) by way of a two-stage planetary gearset (11).

6. A drive as claimed in Claims 1 to 5, **characterised in that** the drive shaft (7) is the rear axle of the pedal vehicle.

7. A drive as claimed in Claims 1 to 6, **characterised in that** the driven wheel drivable by the pedal crank (1) is the left-hand rear wheel.

8. A drive as claimed in Claim 7, **characterised in that** the housing (9) of the freewheel (8) arranged on the drive shaft (7) is connected by screws to the left-hand rear wheel.

9. A drive as claimed in Claim 2, **characterised in that** arranged on the four-cornered shaft (15) there is a cylindrical sleeve (16), which extends from the associated pinion (14) to the right-hand rear wheel.

## Revendications

1. Entraînement pour un trotteur, en particulier pour des enfants, comprenant un essieu d'entraînement (7) pourvu de deux roues d'entraînement, comprenant en outre une manivelle de pédalier (1), dont le pignon (4) est relié, par l'intermédiaire d'une chaîne (5), à un autre pignon (6) reposant de manière fixe sur l'essieu d'entraînement, sachant qu'une première roue d'entraînement repose de manière à pouvoir tourner librement sur l'essieu d'entraînement (7) et peut être entraînée par un moteur électrique (10), **caractérisé en ce qu'**une deuxième roue d'entraînement est reliée, par l'intermédiaire d'une première roue libre (8) bilatérale, à l'essieu d'entraînement (7), et **en ce que** le moteur électrique (2) est relié, par l'intermédiaire d'une deuxième roue libre (12) bilatérale, à un pignon moteur (13) qui s'engrène avec un autre pignon (14) reposant de manière à pouvoir tourner librement sur l'essieu d'entraînement (7), lequel autre pignon est relié en entraînement à l'autre roue d'entraînement.

2. Entraînement selon la revendication 1,
**caractérisé en ce que**
l'autre pignon (14) est relié de manière fixe à un quatre-pans (15), sur lequel repose l'autre roue d'entraînement de manière solidaire en rotation.

3. Entraînement selon les revendications 1 ou 2,
**caractérisé en ce que**
le moteur électrique (10) peut être actionné dans deux directions de rotation.

4. Entraînement selon les revendications 1 à 3,
**caractérisé en ce que**
la vitesse de rotation du moteur électrique (10) peut être réglée.

5. Entraînement selon les revendications 1 à 4,
**caractérisé en ce que**
le moteur électrique (10) est relié à la roue libre (12) par l'intermédiaire d'un engrenage planétaire (11) à deux étages.

6. Entraînement selon les revendications 1 à 5,
**caractérisé en ce que**
l'essieu d'entraînement (7) est l'essieu arrière du trotteur.

7. Entraînement selon les revendications 1 à 6,
**caractérisé en ce que**
la roue d'entraînement pouvant être entraînée par la manivelle de pédalier (1) est la roue arrière gauche.

8. Entraînement selon la revendication 7,
**caractérisé en ce que**
le boîtier (9) de la roue libre (8) agencée sur l'essieu d'entraînement (7) est vissé à la roue arrière gauche.

9. Entraînement selon la revendication 2,
**caractérisé en ce que**
une douille (16) cylindrique est disposée sur le quatre-pans (15), laquelle s'étend du pignon (14) associé en direction de la roue arrière droite.
